# EUROPEAN PATENT APPLICATION

(11) **EP 4 640 599 A1**
(43) Date of publication of application: **29.10.2025**
(21) Application number: 25171475.4
(22) Date of filing: 18.04.2025
(51) Int. Cl.: B65G 47/90, B65G 65/00

(54) **A METHOD FOR COLLECTING A GROUP OF PACKAGES OF FRUIT AND VEGETABLES FROM A CRATE AND A RELATIVE APPARATUS**

(30) Priority: 24.04.2024 IT 202400009496
(71) Applicant: Tiber Pack S.p.A., 52037 Sansepolcro (AR) (IT)
(72) Inventor: CECI, MAURIZIO, 52037 Sansepolcro (AR) (IT)
(74) Representative: Dall'Olio, Christian

(57) **Abstract**

A method and an apparatus are disclosed for collecting a group of packages of fruit and vegetables (1) from a crate (2) comprising steps of positioning and maintaining in position a crate (2) containing a group of packages of fruit and vegetables (1); positioning a plurality of longitudinal elements (6) located at the plurality of through-slots (4) in such a way that the longitudinal elements (6a) and the through-slots (4a) are aligned to one another; inserting the longitudinal elements (6a) into the through-slots (4a) in such a way as to abut the base (5) of the group of packages of fruit and vegetables (1), moving the group of packages of fruit and vegetables (1) and the crate (2) away from one another; arranging a first plurality of forks (7) and a second plurality of forks (8) in order to move the forks in a nearing direction towards the group of packages of fruit and vegetables (1), along the first direction (D), in such a way that the forks insert between the plurality of longitudinal elements (6) and the group of packages of fruit and vegetables (1) so that the forks of the first plurality of forks (7) and of the second plurality of forks (8) receive, on the support portion (70), the group of packages of fruit and vegetables (1); moving the first plurality of forks (7) and the second plurality of forks (8) to move of the group of packages of fruit and vegetables (1) and to deposit the latter on a support plane (9); moving the first plurality of forks (7) and the second plurality of forks (8) in a moving away direction from the group of packages of fruit and vegetables (1), along the first direction (D).

## Description

The present invention relates to the technical sector concerning the movement of groups of packages of fruit and vegetables.

In particular, the present invention relates to a method and apparatus for collecting a group of packages of fruit and vegetables from a crate.

A method is known for collecting a group of packages of fruit and vegetables from a crate comprising steps of:
positioning a crate which comprises: a first side and a second side, which are arranged opposite and parallel to one another, and a third side and a fourth side, which are arranged opposite and parallel to one another and which join the first side and the second side to one another; a bottom having a plurality of through-slots, which crate contains a group of packages of fruit and vegetables, the group of packages of fruit and vegetables comprising: a base arranged resting on a bottom of the crate; a fifth side and a sixth side, which are opposite the first side and the second side; and a seventh side and an eighth side, which are opposite the third side and the fourth side;
positioning a plurality of plier elements at the crate and moving each plier element so that it grasps at least four packages of fruit and vegetables, at the relative corners, so as to pick up a part of the group of packages of fruit and vegetables from the crate.

The group of packages of fruit and vegetables is arranged internally of the crate in an ordered manner, thus reducing to a minimum the empty spaces between one package of fruit and vegetables and another. In this way, when the plier element grips, at the corners, the packages of fruit and vegetables, the lateral walls of the packages of fruit and vegetables, once gripped, go into contact with one another in order to ensure that the fruit and vegetable products present internally of the packages of fruit and vegetables remain therein during the relative picking up from the crate.

However, with the aim of limiting the cost of the packages of fruit and vegetables, in recent years packages of fruit and vegetables have been realised that are progressively lighter, or made with biodegradable materials, such as cardboard.

With packages of fruit and vegetables of this type, there might be more frequent occurrences in which the plier elements break the package of fruit and vegetables and, consequently, damage the fruit and vegetable products present therein.

Further, by making the packages of fruit and vegetables using different material, it follows that the packages of fruit and vegetables are structurally different to one another, in particular in the manufacture of packages of fruit and vegetables having a curvature at the corner that is different.

Consequently, a plier element could grasp with ease a package of fruit and vegetables having a determined curvature of the corner and, at the same time, have difficulty in gripping a package of fruit and vegetables having a more or less accentuated curvature.

This leads to a difficulty in picking up some types of packages of fruit and vegetables by the plier element.

In the light of the above, the aim of the present invention consists in obviating the above-mentioned drawbacks.

The above-mentioned aim is attained by a method for collecting a group of packages of fruit and vegetables from a crate according to claim 1 and an apparatus for collecting a group of packages of fruit and vegetables from a crate according to claim 6.

The method and apparatus objects of the present invention advantageously enable collecting a group of packages of fruit and vegetables from a crate independently of the structure and the material of the packages of fruit and vegetables, as the group of packages of fruit and vegetables and the crate are moved away from one another by means of longitudinal elements, which insert in the through-slots of the crate, abutting the base of the group of packages of fruit and vegetables and which enable the insertion of forks, of a first plurality of forks and of a second plurality of forks, between a plurality of longitudinal elements and the group of packages of fruit and vegetables, so as to restingly receive the group at the relative support portion and remove it from the crate.

Therefore, both the first plurality of longitudinal elements and the first and second plurality of forks interact with the base of the group of packages of fruit and vegetables.

Further, once the group of packages of fruit and vegetables have been removed from the crate, the forks of the first plurality of forks and of the second plurality of forks will deposit the group of packages of fruit and vegetables on the support plane without compromising the stability of the packages of fruit and vegetables, as the movement of the forks away from the group of packages takes place while laterally containing, along the fifth side and the sixth side, the group of packages of fruit and vegetables.

It follows that the picking up of the group of packages of fruit and vegetables from a crate according to the method and apparatus, object of the present invention, does not negatively interfere with the type and structure of the packages of fruit and vegetables, ensuring the stability of the packages of fruit and vegetables from the crate, during the removal thereof from the crate and the depositing on the support plane.

Specific embodiments of the invention will be described in the following part of the present description, according to what is set down in the claims and with the aid of the accompanying tables of drawings, in which:
- figure 1 and figure 2 are views, from two different perspectives, of the apparatus that is the object of the present invention;
- figures 3-12 are views of the apparatus of figure 2, in different steps of the method, which is also an object of the present invention;
- figures 5A, 6A, 8A, 10A, 11A and 12A are views from above respectively of figures 5, 6, 8, 10, 11 and 12;
- figures 6B, 7A, 8B, 9A, 10B and 11B are views alike to those of figures 6-11 according to a first embodiment of the apparatus;
- figures 6C, 7B, 8C, 9B, 10C and 11C are views alike to those of figures 6-11 according to a second embodiment of the apparatus;
- figures 6D, 7C, 8D, 9C, 10D and 11D are views alike to those of figures 6-11 according to a third embodiment of the apparatus;
- figures 13-15 are perspective and lateral views of a fork;
- figures 16-18 are lateral and perspective views of the support and the plurality of longitudinal elements.

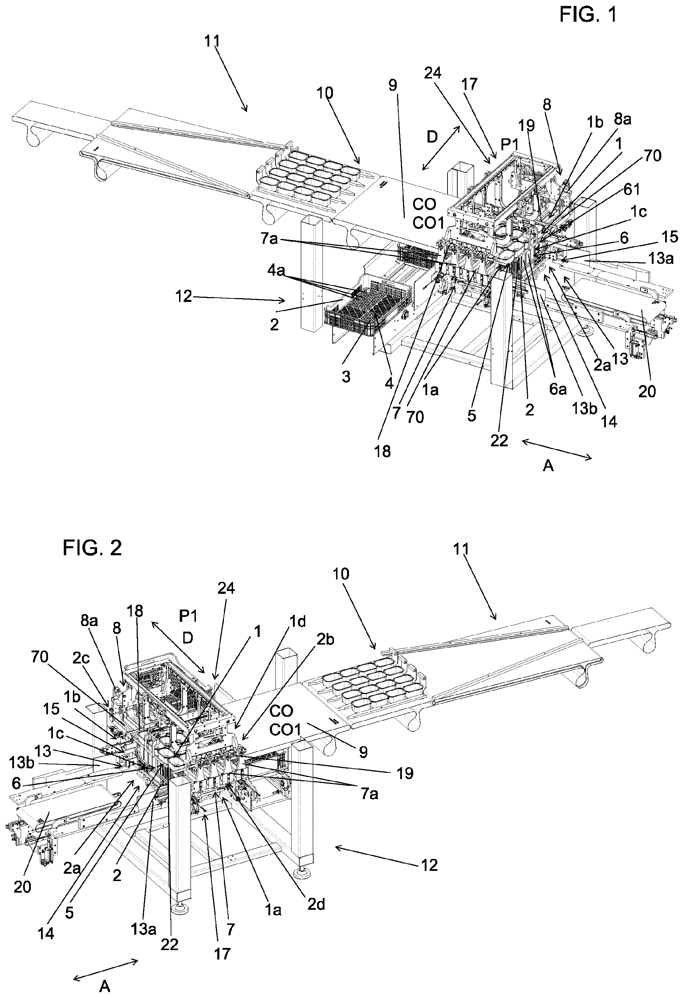

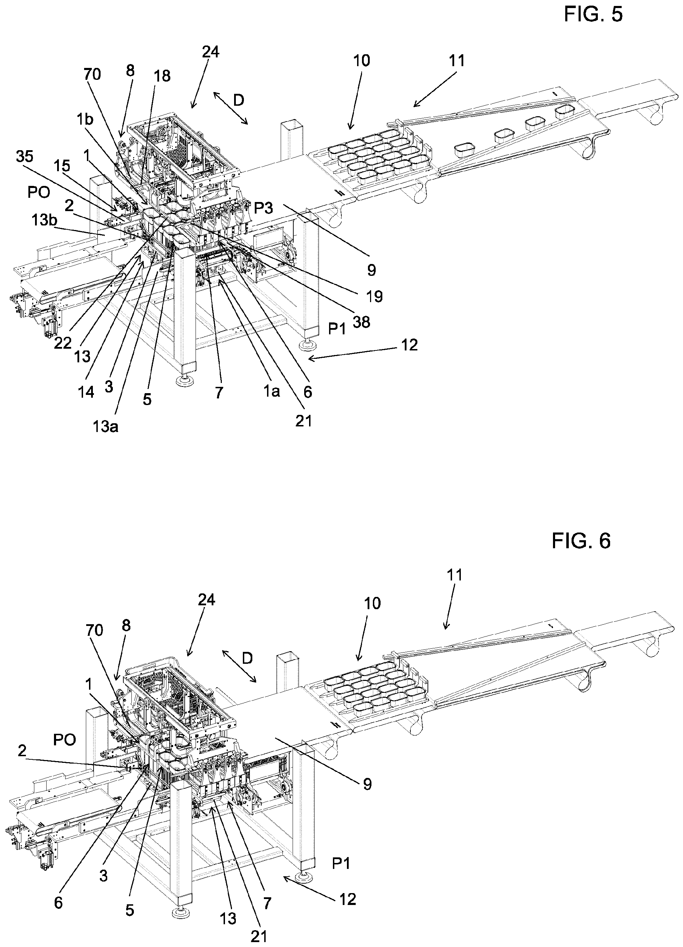

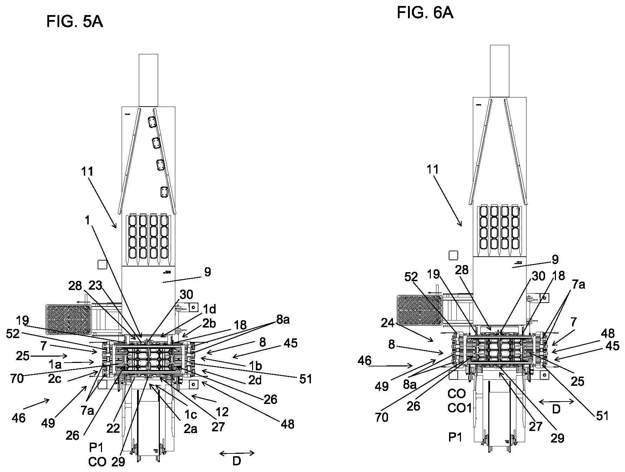

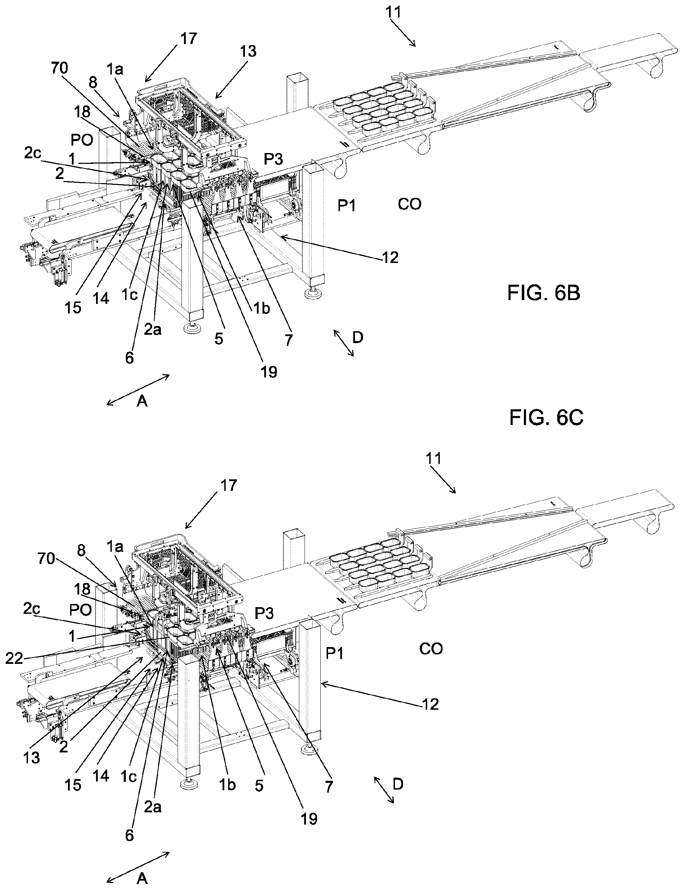

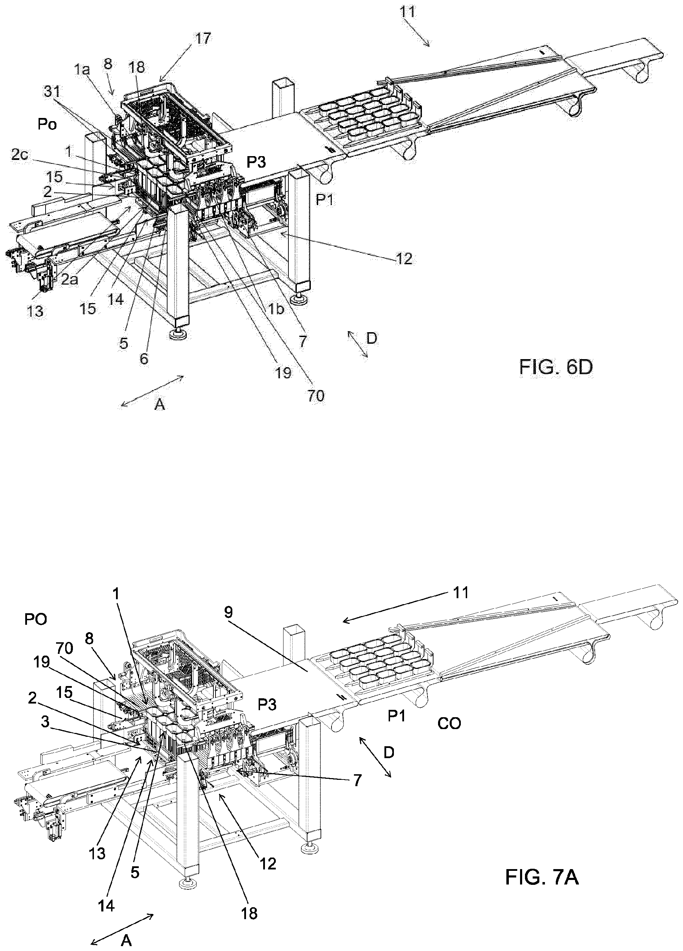

With reference to the appended tables of drawings, the following describes a method for collecting a group of packages of fruit and vegetables (1) from a crate (2), object of the present invention, comprising steps of:
positioning and maintaining in position a crate (2) which comprises: a first side (2a) and a second side (2b), which are arranged opposite and parallel to one another, and a third side (2c) and a fourth side (2d), which are arranged opposite and parallel to one another and which join the first side (2a) and the second side (2b) to one another; a bottom (3) having a plurality of through-slots (4); which crate (2) contains a group of packages of fruit and vegetables (1), which group of packages of fruit and vegetables (1) comprises: a base (5) arranged resting on a bottom (3) of the crate (2); a fifth side (1a) and a sixth side (1b), which are opposite the first side (2a) and the second side (2b); and a seventh side (1c) and an eighth side (1d), which are opposite the third side (2c) and the fourth side (2d) (see figures 1-4);
positioning a plurality of longitudinal elements (6) located at the plurality of through-slots (4) in such a way that the longitudinal elements (6a) and the through-slots (4a) are aligned to one another; each longitudinal element (6a) comprises a first end portion (61) and a second end portion (62), which second end portion (62) is opposite and parallel to the first end portion (61);
inserting the longitudinal elements (6a) into the through-slots (4a) in such a way that the first end portion (61) of the longitudinal elements (6a) crosses the through-slots (4a) and abuts the base (5) of the group of packages of fruit and vegetables (1), moving the group of packages of fruit and vegetables (1) and the crate (2) away from one another (see figures 5, 5A, 6 and 6A);
arranging a first plurality of forks (7) at the fifth side (1a) and a second plurality of forks (8) at the sixth side (1b) of the group of packages of fruit and vegetables (1) (see figures 5, 5A, 6 and 6A); the forks (7a) of the first plurality of forks (7) and of the second plurality of forks (8) comprise a support portion (70) for restingly receiving, at least partially, the group of packages of fruit and vegetables (1).

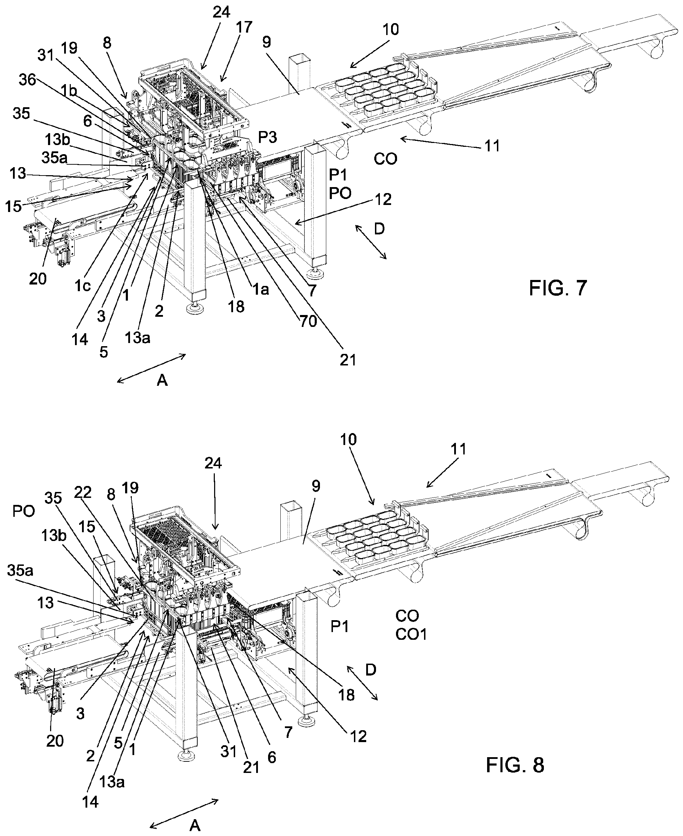

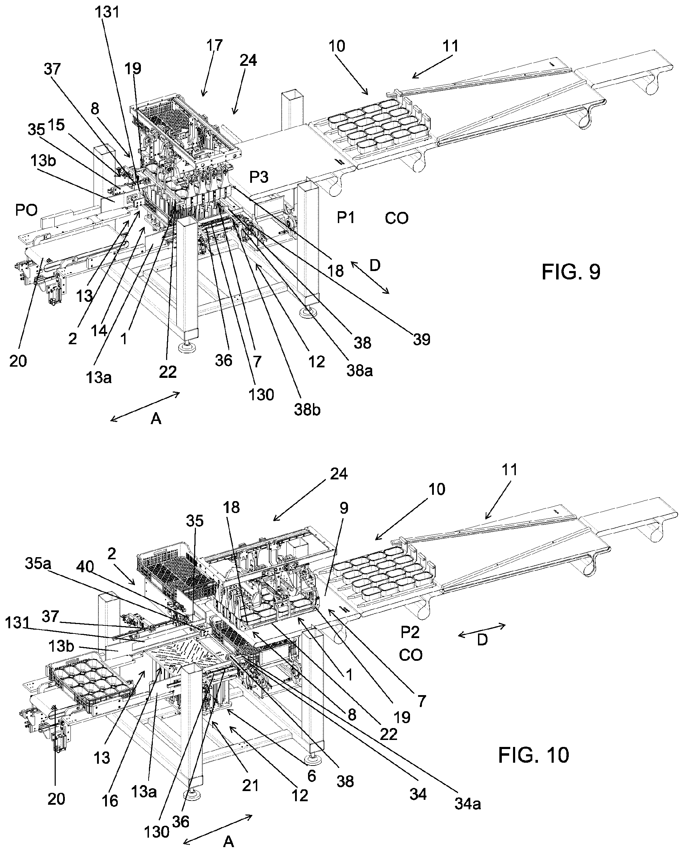

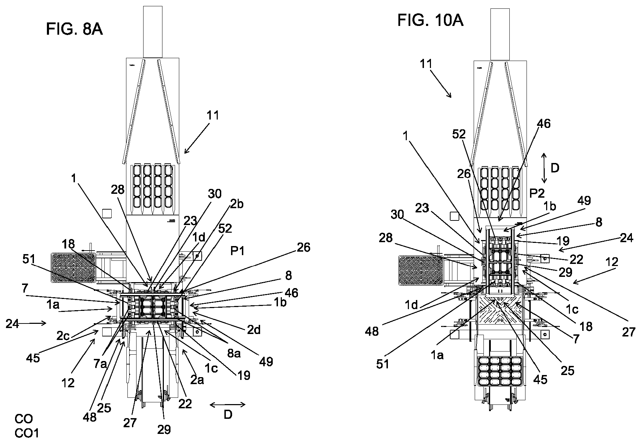

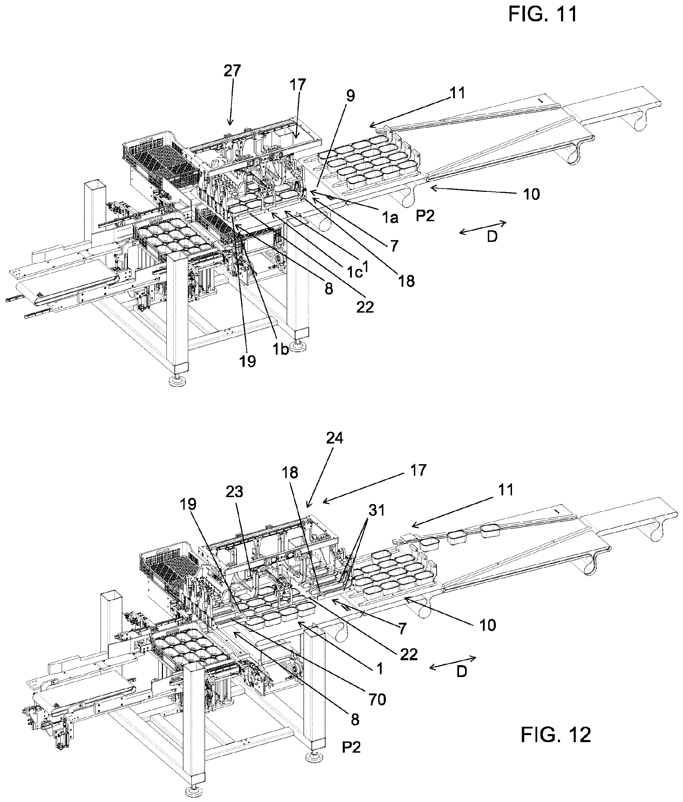

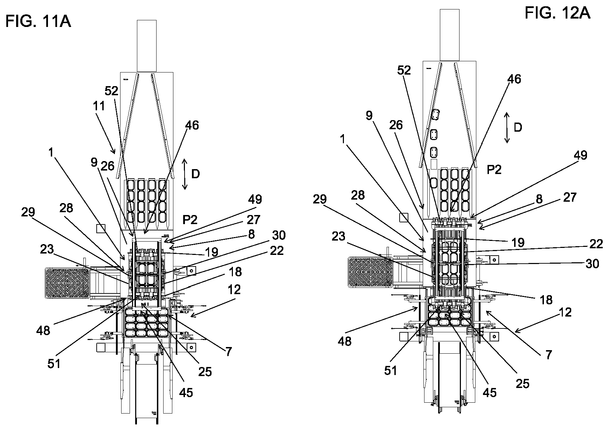

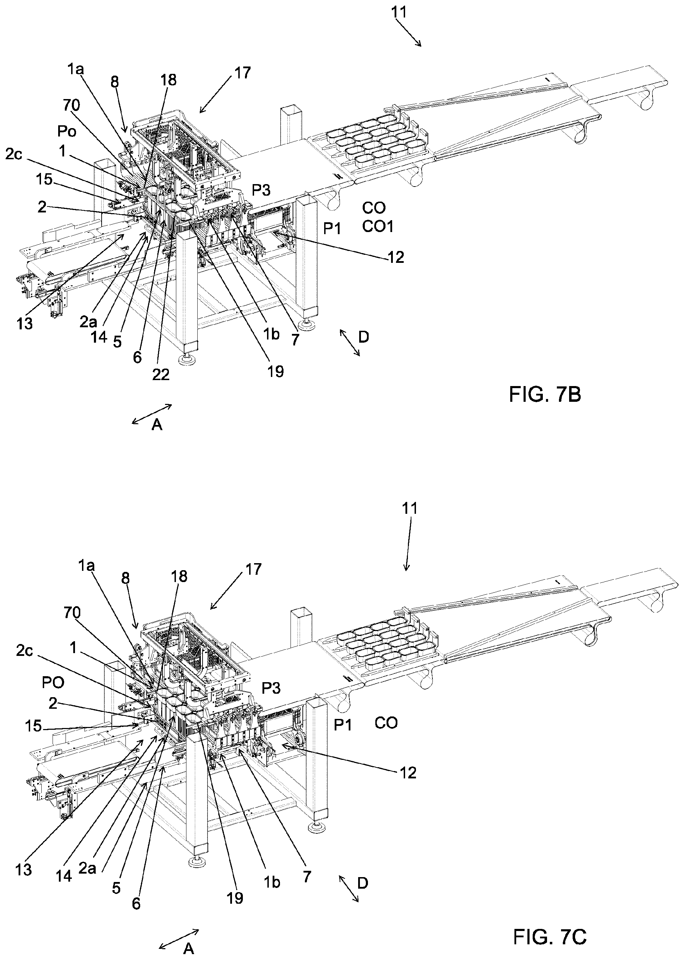

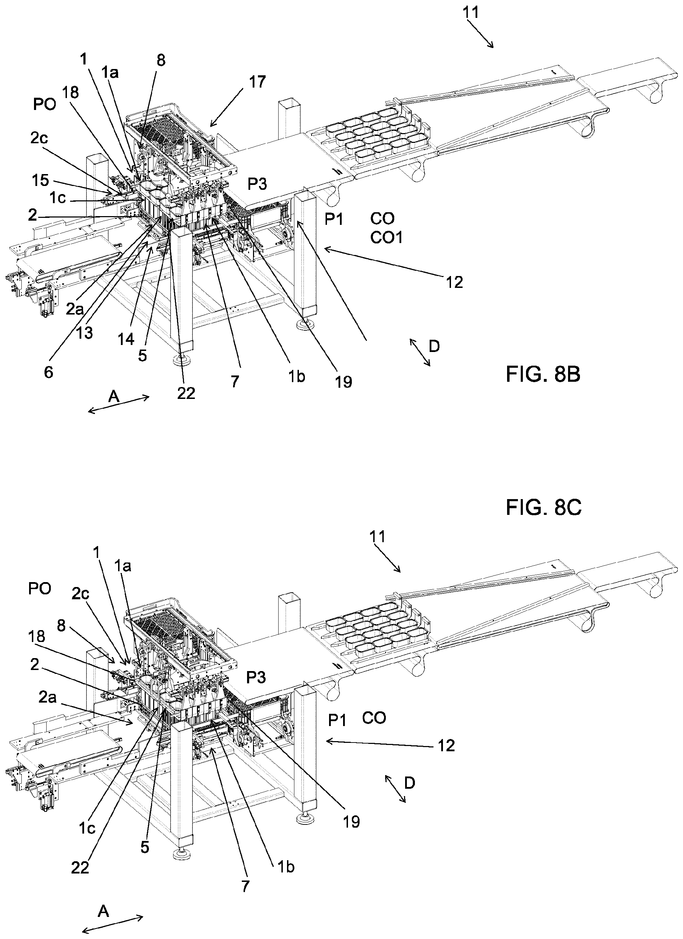

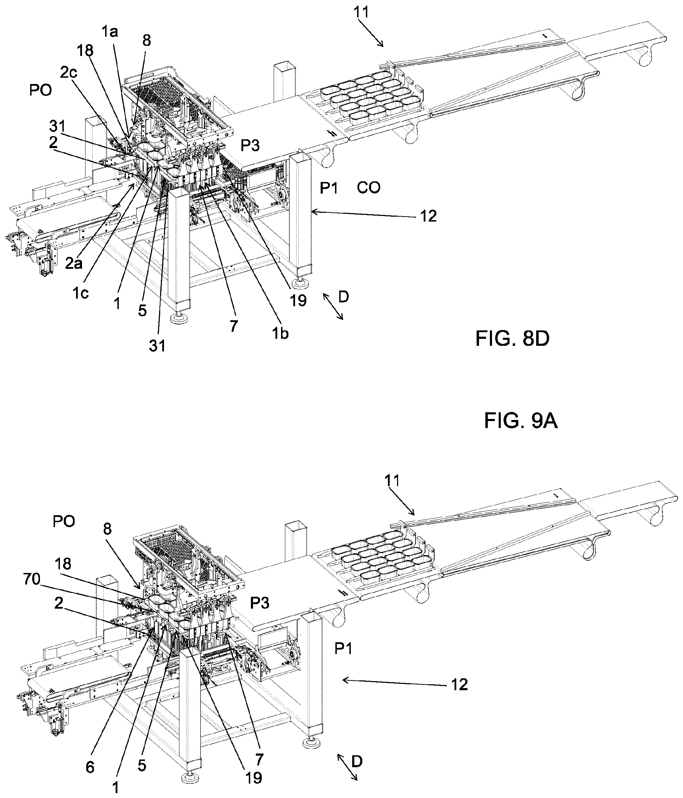

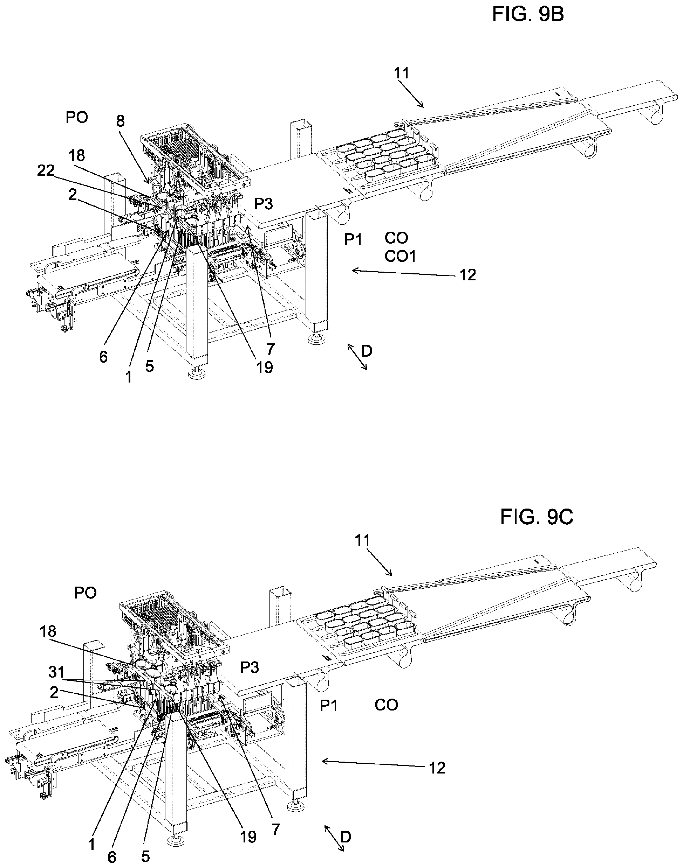

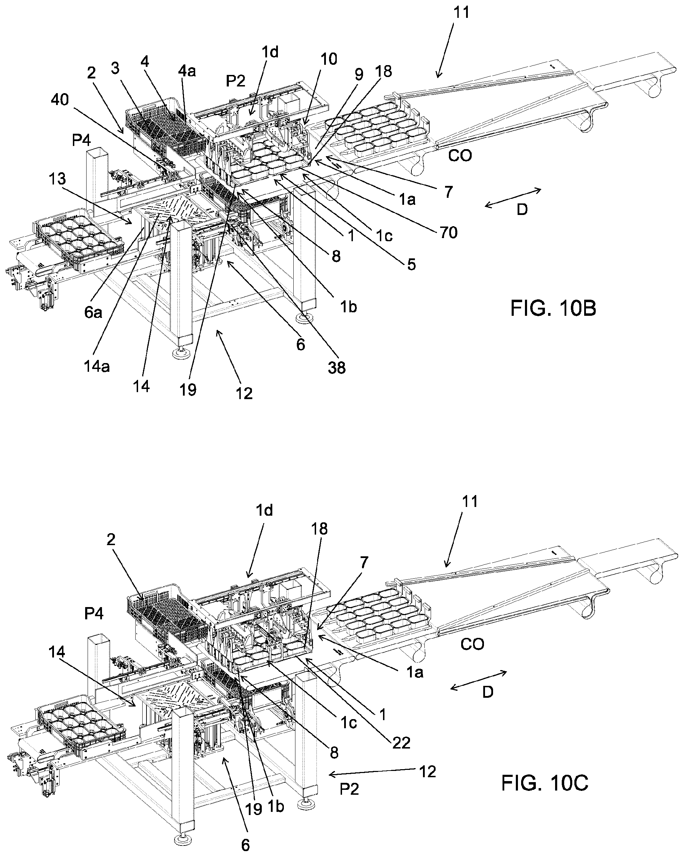

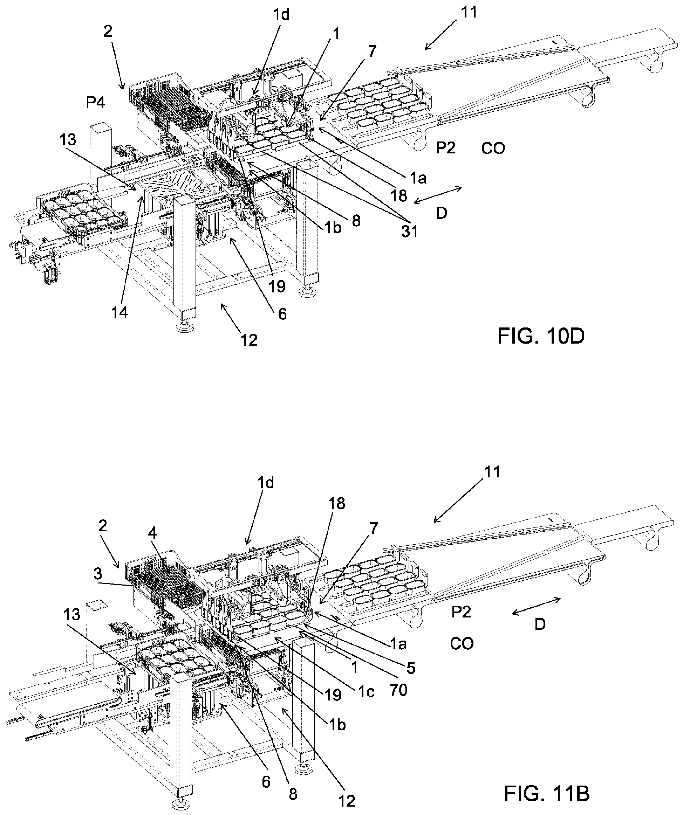

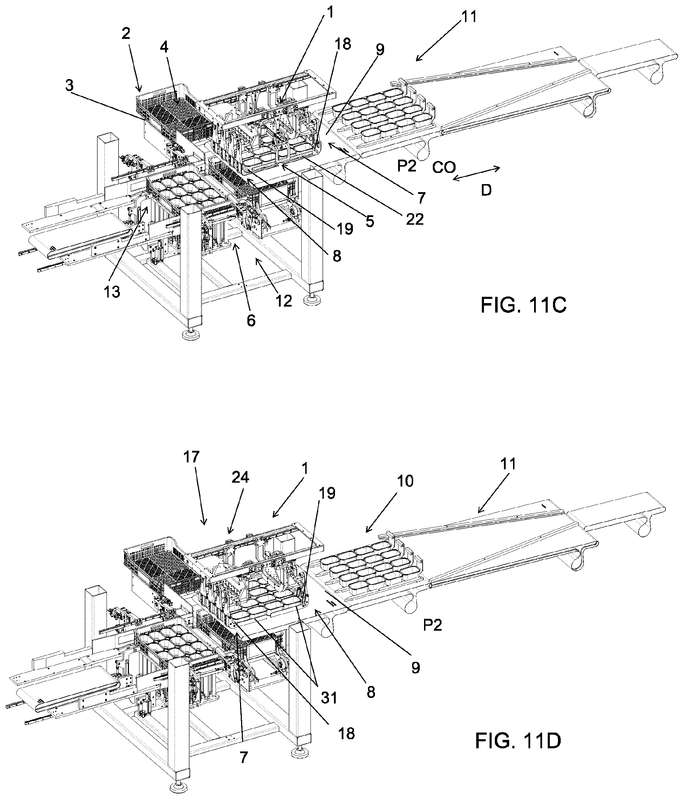

The method further comprises steps of:
moving the first plurality of forks (7) and the second plurality of forks (8), to near the group of packages of fruit and vegetables (1), along a first direction (D) that is transversal to the fifth side (1a) and to the sixth side (1b) of the group of packages of fruit and vegetables (1), in such a way that the forks insert between the plurality of longitudinal elements (6) and the group of packages of fruit and vegetables (1) so that the forks (7a, 8a) of the first plurality of forks (7) and of the second plurality of forks (8) receive, at least partially, on the support portion (70), the group of packages of fruit and vegetables (1) (see figures 7, 8 and 8A);
moving the first plurality of forks (7) and the second plurality of forks (8) to move of the group of packages of fruit and vegetables (1), when received resting on the support portion (70) of the forks (7a, 8a) of the first plurality of forks (7) and of the second plurality of forks (8), and depositing the group of packages of fruit and vegetables (1) on a rest plane (9) (see figures 9, 10 and 10A);
moving the first plurality of forks (7) and the second plurality of forks (8) in a moving away direction from the group of packages of fruit and vegetables (1), along the first direction (D), so that the first and second pluralities of forks (7, 8) release the group of packages of fruit and vegetables (1) onto the rest plane (9) and, at the same time, laterally contain the group of packages of fruit and vegetables (1) along the fifth side (1a) and the sixth side (1b) of the group of packages of fruit and vegetables (1) (see figures 11, 12, 11A and 12A).

The term "collect" in the context of the present description, is taken to mean removing the group of packages of fruit and vegetables (1) from the crate (2) and moving it and depositing it on the support plane (9).

Further, the term "aligned" is taken to mean being positioned along a same straight line.

The packages of fruit and vegetables (10) can be made of plastic or cardboard.

The packages of fruit and vegetables (10) can contain fruit and vegetable products of small dimensions.

The crate (2) can be made of a plastic material.

The step of positioning the crate (2) can include maintaining the crate (2) in a horizontal position, laterally containing it (see figures 1 and 2).

It follows that the insertion of the longitudinal elements (6a) into the through-slots (4a) takes place along a vertical direction (see figures 1 and 2).

The plurality of through-slots (4) can be arranged at the bottom (3) of the crate (2), defining a pattern.

The fifth side (1a) and the sixth side (1b) of the group of packages of fruit and vegetables (1) can be opposite and parallel, respectively, to the third side (2c) and the fourth side (2d) of the crate (2) (see figures 1, 2).

The seventh side (1c) and the eighth side (1d) of the group of packages of fruit and vegetables (1) can be opposite and parallel, respectively, to the first side (2a) and the second side (2b) of the crate (2) (see figures 1, 2).

The lateral containing of the group of packages of fruit and vegetables (1) along the fifth side (1a) and the sixth side (1b) advantageously limits the risk of tipping of the packs of fruit and vegetables (10), which might occur during the movement of the first plurality of forks (7) and of the second plurality of forks (8) along the first direction (D) and away from the group of packages of fruit and vegetables (1), by effect of the friction force between the support portion (70) of each fork (7a, 8a) and the base (5) of the group of packages of fruit and vegetables (1).

For example, the movement of the forks (7a, 8a) of the first plurality of forks (7) and of the second plurality of forks (8) away from the group of packages of fruit and vegetables (1), along the first direction (D), in the absence of lateral containing of the group of packages of fruit and vegetables (1) compact, might lead to the occurrence of episodes of tilting of some packages of fruit and vegetables which, as they contain fruit and vegetable products of small dimensions, might lead to the products falling out of the packaging of fruit and vegetables.

Further, once more, during the movement of the first plurality of forks (7) and of the second plurality of forks (8) along the first direction (D) and away from the group of packages of fruit and vegetables (1), in the absence of the lateral containment along the fifth side (1a) and the sixth side (1b), some packages of fruit and vegetables might be moved away from the remaining part of the group of packages of fruit and vegetables (1) as they are drawn by the forks (7a, 8a).

The step of inserting the longitudinal elements (6a) into the through-slots (4a) can include inserting at least a part of the longitudinal elements in a corresponding part of through-slots.

In detail, each longitudinal element (6a) is to be inserted in each corresponding through-slot (4a) (see figures 1, 2 and 4-6).

The insertion of the longitudinal elements (6a) into the through-slots (4a) can take place along a transversal direction to the bottom (3) of the crate (2).

In detail, the insertion can take place along an orthogonal direction to the bottom (3) of the crate (2) (see figures 1, 2 and 4-6).

The step of arranging a first plurality of forks (7) at the fifth side (1a) can include positioning each fork (7a) of the first plurality of forks (7) with the relative support portion (70) at the base (5) of the group of packages of fruit and vegetables (1) (see figures 6 and 6A).

Likewise, the step of arranging the second plurality of forks (8) at the sixth side (1b) can include positioning each fork (8a) of the second plurality of forks (8) with the relative support portion (70) at the base (5) of the group of packages of fruit and vegetables (1) (see figures 6 and 6A).

Further, the method can comprise a step of moving, reciprocally, the forks (7a) of the first plurality of forks (7), in a nearing or a moving away direction with respect to one another, as a function of the position of the packages of fruit and vegetables (10) to be collected (see figures 5, 6, 5A, 6A, 10, 11, 10A and 11A).

Likewise, the method can comprise a step of moving, reciprocally, the forks (8a) of the second plurality of forks (8), in a nearing or a moving away direction with respect to one another, as a function of the position of the packages of fruit and vegetables (10) to be collected (see figures 5, 6, 5A, 6A, 10, 11, 10A and 11A).

In this matter, the method can comprise a step of moving, reciprocally and nearing to one another, the forks (7a) of the first plurality of forks (7), before moving them along the first direction (D) and in a nearing direction to the group of packages of fruit and vegetables (1) (see figures 5, 6, 5A and 6A).

In the same way, the method can comprise a step of moving, reciprocally and nearing to one another, the forks (8a) of the second plurality of forks (8), before moving them along the first direction (D) and in a nearing direction to the group of packages of fruit and vegetables (1) (see figures 5, 6, 5A and 6A).

In this way, the forks (7a) of the first plurality of forks (7) and the forks (8a) of the second plurality of forks (8) will occupy a space alike to that of the group of packages of fruit and vegetables (1) (see figures 5, 6, 5A and 6A).

In other words, each fork (7a, 8a) of the first plurality of forks (7) and of the second plurality of forks (8) will be able to receive, on the support portion (70), some packages of fruit and vegetables (1) of a same row, defined according to the first direction (D), of the group of packages of fruit and vegetables (1).

Further, the method can comprise a step of moving, reciprocally and away from one another, the forks (7a) of the first plurality of forks (7), when the group of packages of fruit and vegetables (1) is received on the relative support portion (70), before moving the forks along the first direction (D) and in a moving away direction from the group of packages of fruit and vegetables (1) (see figures 10, 11, 10A and 11A).

In the same way, the method can comprise a step of moving, reciprocally and nearing to one another, the forks (8a) of the second plurality of forks (8), when the group of packages of fruit and vegetables (1) is received on the relative support portion (70), before moving the forks along the first direction (D) and in a moving away direction from the group of packages of fruit and vegetables (1) (see figures 10, 11, 10A and 11A).

In this way, the forks (7a) of the first plurality of forks (7) and the forks (8a) of the second plurality of forks (8) will move away the packages of fruit and vegetables of the group of packages of fruit and vegetables (1) during or before depositing the group of packages of fruit and vegetables (1) on the support plane (9) (see figures 10, 11, 10A and 11A).

In other words, the packages of fruit and vegetables are moved away from one another in rows of packages of fruit and vegetables.

The method of the present invention can include carrying out, in succession to one another, steps of (see figures 6-14):
moving the first plurality of forks (7) and the second plurality of forks (8) in a nearing direction towards the group of packages of fruit and vegetables (1), along the first direction (D);
moving the first plurality of forks (7) and the second plurality of forks (8) in order to move of the group of packages of fruit and vegetables (1), when received resting on the support portion (70) of the forks (7a, 8a) of the first plurality of forks (7) and of the second plurality of forks (8), and depositing the group of packages of fruit and vegetables (1) on the rest plane (9);
moving the first plurality of forks (7) and the second plurality of forks (8) in a moving away direction from the group of packages of fruit and vegetables (1), along the first direction (D).

In detail, the method comprises contemporaneously moving the forks (7a, 8a) of the first plurality of forks (7) and of the second plurality of forks (8) along the first direction (D), in a nearing direction to the group of packages of fruit and vegetables (1) or away from the group of packages of fruit and vegetables (1). The first direction (D) can be orthogonal to the fifth side (1a) and to the sixth side (1b) of the group of packages of fruit and vegetables (1).

In other words, the first direction (D) can be parallel to the first side (2a) and the second side (2b) of the crate (2), when the crate (2) is positioned and maintained in position.

The rest plane (9) can comprise a conveyor belt.

In detail, the first plurality of forks (7) and the second plurality of forks (8) can be moved so as to be interposed between the first end portion (61) of the longitudinal elements (6a) of the plurality of longitudinal elements (6) and the base (5) of the group of packages of fruit and vegetables (1).

In detail, the method can comprise the step of laterally containing the group of packages of fruit and vegetables (1), along the fifth side (1a) and the sixth side (1b), before the step of moving the first plurality of forks (7) and the second plurality of forks (8), along the first direction (D) and in a moving away direction from the group of packages of fruit and vegetables (1) (see figures 10, 10A, 11, 11A, 12 and 12A).

The group of packages of fruit and vegetables (1) will advantageously be made more compact by the lateral containing.

Further, the method can comprise a step of laterally containing the group of packages of fruit and vegetables (1) along the fifth side (1a) and the sixth side (1b), during the nearing movement of the group of packages of fruit and vegetables (1) and along the first direction (D), of the first plurality of forks (7) and of the second plurality of forks (8) (see figures 6, 6A, 7, 8 and 8A).

The method preferably comprises a step of: laterally containing the group of packages of fruit and vegetables (1) along the seventh side (1c) and the eighth side (1d), during the movement of the first plurality of forks (7) and of the second plurality of forks (8) in a nearing direction towards the group of packages of fruit and vegetables (1) and along the first direction (D) (see figures 6, 6A, 7, 8 and 8A).

The lateral containing of the group of packages of fruit and vegetables (1) along the seventh side (1c) and the eighth side (1d) advantageously limits the possibility of tipping of the packages of fruit and vegetables, which might take place during the movement of the first plurality of forks (7) and of the second plurality of forks (8), along the first direction (D), by effect of the friction force of the support portion (70) of each fork (7a, 8a) along the base (5) of the group of packages of fruit and vegetables (1).

Again by way of example, and as mentioned above, the moving away of the forks (7a, 8a) from the group of packages of fruit and vegetables (1), along the first direction (D), so as to deposit the group of packages of fruit and vegetables (1) on the support plane (9), in the absence of lateral containing for maintaining the group of packages of fruit and vegetables (1) compact, might lead to the occurrence of episodes of tilting of some packages of fruit and vegetables which, as they contain fruit and vegetables of small dimensions, might in turn cause fruit and vegetables to fall out of the package of fruit and vegetables.

The step of moving the first plurality of forks (7) and the second plurality of forks (8) in a moving away direction from the group of packages of fruit and vegetables (1) and along the first direction (D), so that the first and second pluralities of forks (7, 8) release the group of packages of fruit and vegetables (1) on the rest plane (9) and, at the same time, laterally contain the group of packages of fruit and vegetables (1) along the fifth side (1a) and the sixth side (1b) of the group of packages of fruit and vegetables (1) includes laterally containing the sides, which are parallel to the fifth side (1a) and the sixth side (1b), of each row of packages of fruit and vegetables of the group of packages of fruit and vegetables (1) (see figures 10, 10A, 11, 11A, 12 and 12A).

The step of laterally containing the group of packages of fruit and vegetables (1) along the fifth side (1a) and the sixth side (1b) can take place contemporaneously with the step of laterally containing the group of packages of fruit and vegetables (1) along the seventh side (1c) and the eighth side (1d). Further, the step of laterally containing along the fifth side (1a), sixth side (1b), seventh side (1c) and the eighth side (1d) can take place before the step of moving the first plurality of forks (7) and the second plurality of forks (8), along the first direction (D) and in a nearing direction towards the group of packages of fruit and vegetables (1), in such a way as to compact the group of packages of fruit and vegetables (1) before inserting the forks (7a, 8a) between the plurality of longitudinal elements (6) and the group of packages of fruit and vegetables (1) (see figures 6-8).

In this way, the group of packages of fruit and vegetables (1) is compacted along the four sides thereof (1a, 1b, 1c, 1d) before inserting the first plurality of forks (7) and the second plurality of forks (8) between the plurality of longitudinal elements (6) and the base (5) of the group of packages of fruit and vegetables (1).

The step of laterally containing along the fifth side (1a), sixth side (1b), seventh side (1c) and the eighth side (1d) can further be carried out during the step of moving the group of packages of fruit and vegetables (1), when received resting on the support portion (70) of the forks (7a, 8a) of the first plurality of forks (7) and of the second plurality of forks (8).

The method can comprise a step of: supporting the group of packages of fruit and vegetables (1) with the support portion (70) of the forks (7a, 8a) of the first plurality of forks (7) and of the second plurality of forks (8), and, contemporaneously, distancing the forks (7a, 8a) of the first plurality of forks (7) and the forks of the second plurality of forks (8) from one another, before depositing the group of packages of fruit and vegetables (1) on the rest plane (9).

In this case, the latter step is carried out without performing the step of laterally containing the group of packages of fruit and vegetables (1) along the seventh side (1c) and the eighth side (1d).

The method preferably comprises a step of moving the first plurality of forks (7) and the second plurality of forks (8), when restingly receiving the group of packages of fruit and vegetables (1) at the support portion (70), from a first position (P1) to a second position (P2) and carrying out, in the second position (P2), steps of:
moving the first plurality of forks (7) and the second plurality of forks (8) in a moving away direction from the group of packages of fruit and vegetables (1) along the first direction (D) and, at the same time, laterally containing the group of packages of fruit and vegetables (1) along the fifth side (1a) and the sixth side (1b).

The reciprocal moving away of the forks (7a, 8a) of the first plurality of forks (7) and of the second plurality of forks (8) and therefore of the packages of fruit and vegetables of the group of packages of fruit and vegetables (1), advantageously takes place at the second position (P2) so as to deposit the packages of fruit and vegetables spaced from one another.

The second position (P2) can be on the support plane (9).

The method can further comprise a step of: removing the longitudinal elements (6a) from the through-slots (4a) so that they are no longer engaged to one another;
moving the crate (2), from which the group of packages of fruit and vegetables (1) have been collected, towards a depositing station (see figures 11, 12, 11A and 12A).

The following is a description of an apparatus, denoted by a generic reference (11), for collecting a group of packages of fruit and vegetables (1) from a crate (2), also an object of the present invention.

In the following part of the description, the same considerations are applied as above for the crate (2), the group of packages of fruit and vegetables (1) and the packages of fruit and vegetables (10).

The steps of the loading method described in the following can be carried out with the apparatus (11).

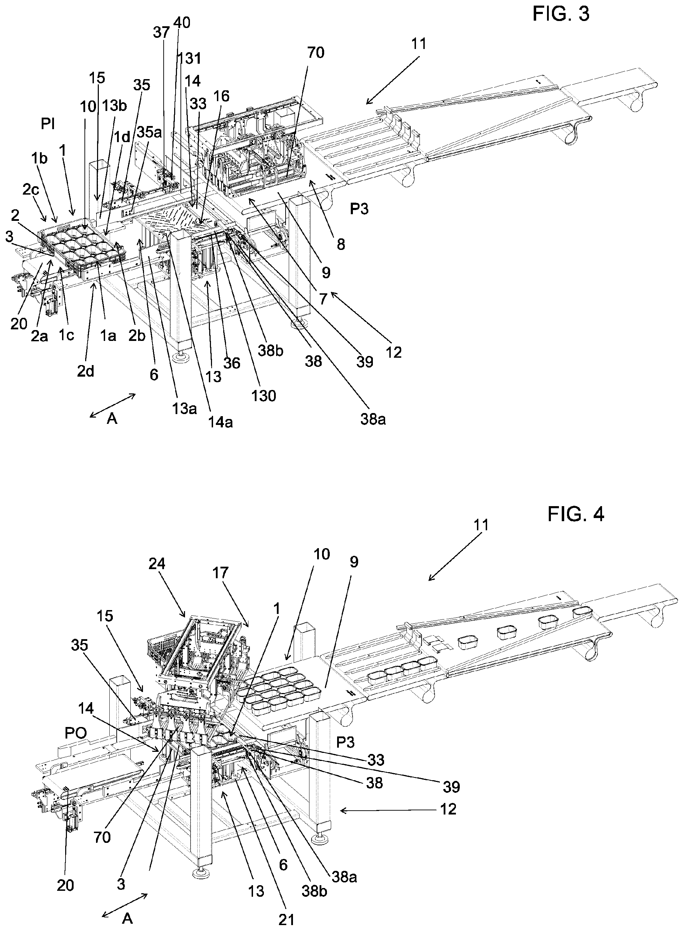

With particular reference to figures 1 and 2, the apparatus (11) for collecting a group of packages of fruit and vegetables (1) from a crate (2) comprises:
a frame (12); a positioning station (13) which is borne by the frame (12) and which is conformed so as to receive in position a crate (2), which in turn comprises: a first side (2a) and a second side (2b), which are arranged opposite and parallel to one another, and a third side (2c) and a fourth side (2d), which are arranged opposite and parallel to one another and which join the first side (2a) and the second side (2b) to one another; a bottom (3) having a plurality of through-slots (4); which crate (2) contains a group of packages of fruit and vegetables (1), which group of packages of fruit and vegetables (1) comprises: a base (5) arranged resting on a bottom (3) of the crate (2); a fifth side (1a) and a sixth side (1b), which are opposite the third side (2c) and the fourth side (2d), and a seventh side (1c) and an eighth side (1d), which are opposite the first side (2a) and the second side (2b) (see figures 3 and 4).

The positioning station (13) comprises: a support (14) which comprises a first plurality of through-slots (16) and which comprises a first face (14a) and a second face (14b), which second face (14b) is opposite and parallel to the first face (14a) and is conformed so as to receive the crate (2); positioning means (15) which are arranged and configured so as to maintain the crate (2) in position in the positioning station (13) so that, when the crate (2) is received on the support (14), the through-slots (4a, 16a) of the plurality of through-slots (4a) and of the first plurality of through-slots (16) are aligned to one another (see figures 3 and 4).

Further, the apparatus (11) comprises: a plurality of longitudinal elements (6) which are arranged along the first face (14a) of the support (14) and positioned so as to be aligned to the through-slots (16a) of the first plurality of through-slots (16); each longitudinal element (6a) comprises a first end portion (61) and a second end portion (62), which second end portion (62) is opposite and parallel to the first end portion (61); the longitudinal elements (6a) being slidably movable with respect to the support (14) in order to insert into the through-slots (16a) of the first plurality of through-slots (16) in such a way that the first end portion (61) of the longitudinal elements (6a) crosses the through-slots (16a, 4a) of the first plurality of through-slots (16) and of the plurality of through-slots (4), when the crate (2) is received on the second face (14b) of the support (14), in order to abut the base (5) of the group of packages of fruit and vegetables (1) and move the group of packages of fruit and vegetables (1) and the crate (2) away from one another; and gripping means (17) which: are arranged superiorly of the support (14); comprise a first plurality of forks (7) and a second plurality of forks (8), which forks (7a, 8a) comprise a support portion (70) for restingly receiving, at least partially, the group of packages of fruit and vegetables (1); and are movable, with respect to the frame (12), so as to position the first plurality of forks (7) at the fifth side (1a) and the second plurality of forks (8) at the sixth side (1b).

The first plurality of forks (7) and the second plurality of forks (8) being slidably movable, with respect to the support (14), so as:
to near the group of packages of fruit and vegetables (1), along a first direction (D) that is transversal to the fifth side (1a) and to the sixth side (1b) of the group of packages of fruit and vegetables (1), in such a way that the forks insert between the plurality of longitudinal elements (6) and the base (5) of the group of packages of fruit and vegetables (1);
to move away from the group of packages of fruit and vegetables (1), along the first direction (D), so as to release the group of packages of fruit and vegetables (1), once received on the support portion (70), at a rest plane (9).

Further, the apparatus (11) comprises a first abutment (18) and a second abutment (19) which are borne by the gripping means (17) and which are arranged opposite and parallel to one another and which are positioned so as to laterally contain the group of packages of fruit and vegetables (1), respectively, along the fifth side (1a) and the sixth side (1b), during the distancing movement, along the first direction (D), of the forks (7a, 8a) of the first plurality of forks (7) and of the second plurality of forks (8), from the group of packages of fruit and vegetables (1) (see figures 7 and 8).

The first plurality of forks (7) and the second plurality of forks (8) can be moved along the first direction (D) in two opposite directions i.e. in a nearing or a moving away direction to or from the group of packages of fruit and vegetables (1).

Figures 6B, 7A, 8B, 9A, 10B and 11B illustrate the above-mentioned first embodiment, respectively, during the steps of the method illustrated in figures 6, 7, 8, 9, 10 and 11.

The apparatus (11) can comprise a first conveyor belt (20) for transporting, in a second supply direction (A), the crate (2) towards the positioning station (13) (see figures 3 and 4).

The positioning station (13) can comprise a first lateral wall (13a) and a second lateral wall (13b), which is opposite and parallel to the first lateral wall (13a) (see figures 3 and 4).

The first lateral wall (13a) and the second lateral wall (13b) can be arranged to laterally surround the support (14) (see figures 3 and 4).

When the crate (2) is received in the positioning station (13), the crate (2) is arranged in such a way that: the third side (2c) is opposite and parallel to the second lateral wall (13b); the fourth side (2d) is opposite and parallel to the first lateral wall (13a) (see figures 3 and 4).

The through-slots (16a) of the first plurality of through-slots (16) can define a pattern alike to the one defined by the through-slots (4a) of the plurality of through-slots (4).

Each longitudinal element (6a) can have a dedicated longitudinal extension element which is transversal to the support (14).

The apparatus (11) can comprise a movable platform (21) which bears the plurality of longitudinal elements (6) (see figures 4-6 and 16-18).

The movable platform (21) can be slidably coupled to the frame (12) (see figures 4-6).

The movable platform (21) can be moved to near the longitudinal elements (6a) to the support (14) and therefore allow the insertion of the longitudinal elements (6a) in the through-slots (16a) of the first plurality of through-slots (see figures 4-6).

Further, the movable platform (21) can be moved to move the longitudinal elements (6a) away from the support (14) and therefore allow the exit of the longitudinal elements (6a) from the through-slots (4a) (see figures 9 and 10).

The movable platform (21) can be moved slidably in a vertical direction (see figures 4-6, 9 and 10).

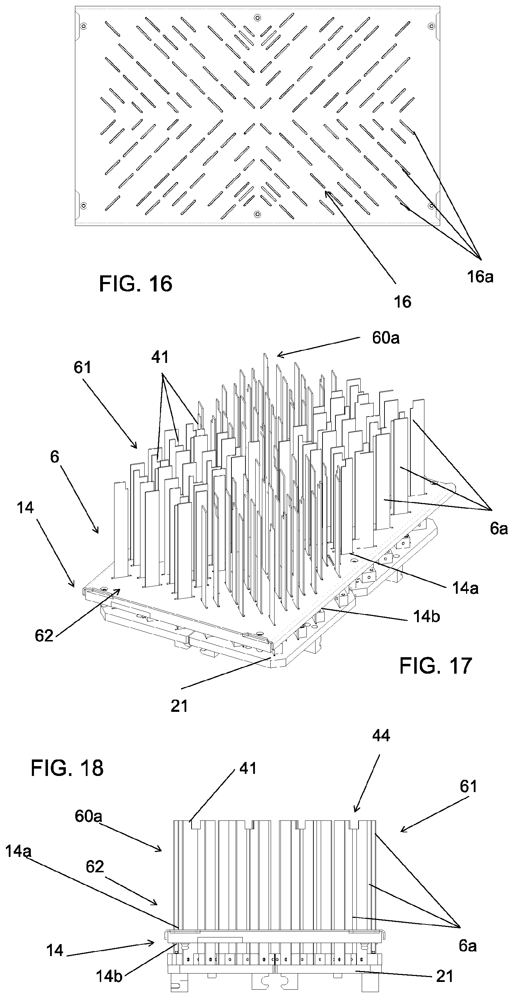

The longitudinal elements (6a) can be removably coupled to the movable platform (21) (see figures 16-18).

It is advantageously possible to replace some longitudinal elements (6a).

The support (14) can be arranged superiorly of the movable platform (21) (see figures 4-6, 9 and 10).

The first abutment (18) and the second abutment (19) can form a rod (see figures 6B, 7A, 8B, 9A, 10B and 11B).

The first abutment (18) and the second abutment (19) can be configured to assume: an operating configuration (CO) in which the abutments laterally contain the group of packages of fruit and vegetables (1), respectively along the fifth side (1a) and the sixth side (1b), during the moving away movement from the group of packages of fruit and vegetables (1) and along the first direction (D), of the forks (7a, 8a) of the first plurality of forks (7) and of the second plurality of forks (8) (see figures 7, 8 and 9).

Further, the first abutment (18) and the second abutment (19) can be configured to assume the operating configuration (CO) also during the reciprocal nearing movement to the group of packages of fruit and vegetables (1) and, along the first direction (D), of the forks (7a, 8a) of the first plurality of forks (7) and of the second plurality of forks (8) (see figures 7 and 8).

According to a second embodiment the apparatus (11) can further comprise a third abutment (22) and a fourth abutment (23): which are borne by the gripping means (17); which are arranged opposite and parallel to one another and transversally to the first abutment (18) and to the second abutment (19); which are positioned so as to laterally contain the group of packages of fruit and vegetables (1), respectively, along the seventh side (1c) and the eighth side (1d), during the reciprocal nearing movement to the group of packages of fruit and vegetables (1) and, along the first direction (D), of the forks of the first plurality of forks (7) and of the second plurality of forks (8) (see figures 7-10, 6C, 7B, 8C, 9B, 10C and 11C).

The third abutment (22) and the fourth abutment (23) advantageously contain the group of packages of fruit and vegetables (1), along the seventh side (1c) and the eighth side (1d), limiting possible tipping of the packages of fruit and vegetables (10), which might take place during the movement of the first plurality of forks (7) and of the second plurality of forks (8), along the first direction (D), by effect of the friction force of the support portion (70) of each fork (7a, 8a) along the base (5) of the group of packages of fruit and vegetables (1).

Figures 6C, 7B, 8C, 9B, 10C and 11C illustrate the above-mentioned second embodiment respectively during the steps of the method depicted in figures 6, 7, 8, 9, 10 and 11.

The third abutment (22) and the fourth abutment (23) can form a rod.

The third abutment (22) and the fourth abutment (23) can be configured to assume: a first operating configuration (CO1) in which laterally contain the group of packages of fruit and vegetables (1), respectively along the seventh side (1c) and the eighth side (1d), during the moving away and/or nearing movement to the group of packages of fruit and vegetables (1) and along the first direction (D), of the forks (7a, 8a) of the first plurality of forks (7) and of the second plurality of forks (8) (see figures 7-10).

The apparatus (11) can comprise a movement unit (24) configured to move the gripping means (17), the first abutment (18) and the second abutment (19) (see figures 5A, 6A, 8A, 10A, 11A and 12A).

The movement unit (24) can be configured also to move the third abutment (22) and the fourth abutment (23) (see figures 5A, 6A, 8A, 10A, 11A and 12A). The movement unit (24) can comprise a first movement sub-unit (25) which bears the first abutment (18) and which is slidingly movable along the first direction (D) (see figures 5A, 6A, 8A, 10A, 11A and 12A).

The movement unit (24) can comprise a second movement sub-unit (26) which bears the second abutment (19) and which is slidably movable along the first direction (D) (see figures 5A, 6A, 8A, 10A, 11A and 12A).

The first movement sub-unit (25) and the second movement sub-unit (26) can be movable towards or away from one another.

The movement unit (24) can comprise a third movement sub-unit (27) which bears the third abutment (22) and which is slidably movable along a transversal direction to the first direction (D) (see figures 5A, 6A, 8A, 10A, 11A and 12A).

The movement unit (24) can comprise a fourth movement sub-unit (28) which bears the fourth abutment (23) and which is slidably movable along a transversal direction to the first direction (D) (see figures 5A, 6A, 8A, 10A, 11A and 12A).

The third movement sub-unit (27) and the fourth movement sub-unit (18) can be movable towards or away from one another (see figures 5A, 6A, 8A, 10A, 11A and 12A).

Further, the third movement sub-unit (27) can comprise a first fulcrum of rotation (29) and the fourth movement sub-unit (28) can comprise a second fulcrum of rotation (30) (see figures 5A, 6A, 8A, 10A, 11A and 12A).

The third abutment (22) can be rotatable with respect to the first fulcrum of rotation (29).

The fourth abutment (23) can be rotatable with respect to the second fulcrum of rotation (30).

The third movement sub-unit (27) and the fourth movement sub-unit (28) can be arranged in such a way that the third abutment (22) and the fourth abutment (23) laterally contain the group of packages of fruit and vegetables (1), along the seventh side (1c) and the eighth side (1d), following the rotation about, respectively, the first fulcrum of rotation (29) and the second fulcrum of rotation (30) so as to near the group of packages of fruit and vegetables (1) (see figures 5A, 6A, 8A, 10A, 11A and 12A).

In other words, the third abutment (22) and the fourth abutment (23) assume the first operating configuration (CO1), following the rotation towards the group of articles (1) about, respectively, the first fulcrum of rotation (29) and the second fulcrum of rotation (30).

In a third embodiment, the forks (7a, 8a) of the first plurality of forks (7) and of the second plurality of forks (8) preferably comprise a pair of lateral containing walls (31), each arranged at the edge of the fork (7a, 8a) so as to contain, along sides parallel to the fifth side (1a) and to the sixth side (1b), each row of packages of fruit and vegetables of the group of packages of fruit and vegetables (1).

Figures 6D, 7C, 8D, 9C, 10D and 11D illustrate the third embodiment, respectively during the steps of the method depicted in figures 6, 7, 8, 9, 10 and 11.

Advantageously, during the movement of the first plurality of forks (7) and of the second plurality of forks (8) to move the group of packages of fruit and vegetables (1), when the group is received restingly on the support portion (70) of the forks (7a, 8a) of the first plurality of forks (7) and of the second plurality of forks (8), and to deposit the group on a rest plane (9), each pair of lateral containing walls (31) ensures the stability of each row of packages of fruit and vegetables, having an orientation parallel to the fifth side (1a) and to the sixth side (1b).

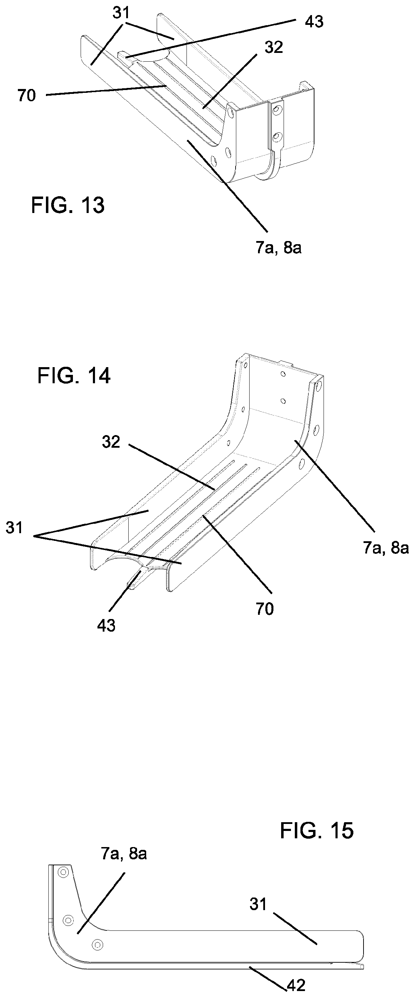

The support portion (70) of the forks can comprise projections (32) for reducing the friction between the support portions and the base (5) of the group of packages of fruit and vegetables (1) (see figures 13-15).

The lateral containing walls (31) begin from the support portion (70).

The positioning means (15) can comprise a first abutting wall (33) which is arranged laterally to the support (14) in such a way as to abut the second side (2b) of the crate (2), when the crate (2) is received on the second face (14b) of the support (14) (see figure 3).

The first abutment wall (33) can be arranged downstream according to the supply direction (A) (see figure 3).

During the infeeding of the crate (2) to the positioning station (13), the crate (2) will advantageously interrupt the advancement thereof and abut the first abutment wall (33) so as to be maintained in position in the positioning station (13).

The positioning means (15) can comprise a first pusher (34) and a second pusher (35) which: are slidably coupled to the frame (12); are arranged at the support (14); and are configured to push the crate (2), when the crate (2) is received on the second face (14b) of the support (14), against the first abutment wall (33) (see figures 3, 4, 7-9 and 10).

The first pusher (34) can bear, at a relative end thereof, a first pusher wall (34a) formed to contact the first side (2a) of the crate (2) (see figures 3, 4, 7-9 and 10).

Likewise, the second pusher (35) can bear, at a relative end thereof, a second pusher wall (35a) formed to contact the first side (2a) of the crate (2).

The first pusher wall (34a) and the second pusher wall (35a) form an L-shape (see figures 3, 4, 7-9 and 10).

The relative second end of the first pusher (34) and of the second pusher (35) can be slidably coupled to a first guide (36) which is arranged along the support (14), according to the supply direction (A), and to a second guide (37) which is arranged along the support (14), according to the supply direction (A) and which is opposite and parallel to the first guide (36), (see figures 3, 4, 7-9 and 10).

The first guide (36) can extend parallel to the fourth side (2d) of the crate (2) (see figures 3, 4, 7-9 and 10).

The second guide (37) can extend parallel to the third side (2c) of the crate (2) (see figures 3, 4, 7-9 and 10).

The first lateral wall (13a) and the second lateral wall (13b) of the positioning station (13) can each comprise a first through-opening (130) and a second through-opening (131) (see figures 10-12).

The first pusher (34) and the second pusher (35) can be slidably movable along the first guide (36) and the second guide (37) so as to slide with the first end along, respectively, the first through-opening (130) and the second through-opening (131) (see figures 10-12).

In this way, once the group of packages of fruit and vegetables (1) has been collected from the crate (2) and the longitudinal elements (6a) have been removed from the through-slots (4a), the first and the second pusher (34, 35) will push the by-now empty crate (2) towards the depositing station.

The first pusher (34) and the second pusher (35) can assume an operating position (PO), in which the relative pusher wall (34a, 35a) contact the first side (2a) of the crate (2) and a non-operating position (PI), in which the relative pusher wall (34a, 35a) and the first side (2a) of the crate (2) are not in contact with one another (see figures 3-6, 11).

In the operating position (PO), the first pusher (34) and the second pusher (35) cross, respectively, the first through-opening (130) and the second through-opening (131) (see figures 3-6 and 7-9).

The apparatus (11) preferably comprises at least a contact element (38): which is borne by the frame (12); and which is movable so as to assume: a third position (P3), wherein the at least a contact element (38) and the crate (2) are in contact with one another, when the crate (2) is received in the positioning station (13); and a fourth position (P4) in which the at least a contact element (38) and the crate (2) are not in contact with one another, when the crate (2) is received in the positioning station (13) (see figures 10B, 10C, and 10D). Further, the apparatus (11) comprises a position sensor (39) which is arranged in proximity of the at least a contact element (38) so as to detect a position change, with respect to the third position (P3), of the at least a contact element (38), following the movement of the crate (2), when the crate (2) is received in the positioning station (13) and the at least a contact element (38) assumes the third position (P3) (see figures 3, 4, 10, 10B, 10C and 10D).

The at least a contact element (38) can be moved by an actuator (38a) which is connected, at an end thereof, to the frame (12) (see figures 3, 4 and 10).

Further, the at least a contact element (38) can be maintained in the third position (P3) by effect of a pre-loaded spring (38b) which is interposed between the at least a contact element (38) and the support (14) (see figures 3, 4 and 10).

Advantageously, in a case in which the crate (2), during the insertion of the longitudinal elements (6a) in the through-slots (4a), begins moving, exerting a pushing force on the at least a contact element (38), should the pushing force be minimal, then the pre-loaded spring (38b) would avoid any possible change of position of the contact element (38). However, should the pushing force be such as to overcome the pre-load of the pre-loaded spring (38b), then the at least a contact element (38) would be moved from the crate (2) and the position sensor (39) would detect the change in position of the contact element (38) and would send an alarm signal to a control unit with the purpose of blocking the functioning of the apparatus (11).

The apparatus (11) can comprise a second contact element (40) (see figures 3, 4 and 10).

Regarding the second contact element (40) the same considerations as for the at least a contact element (38) are valid.

In a case in which the apparatus (11) comprises the at least a contact element (38) and the second contact element (40) which are arranged one opposite the other with respect to the crate (2) in such a way as to contact the end edge of the third side (2c) and of the fourth side (2d).

In detail, the crate (2) can be maintained in position in the positioning station (13) by the first pusher (34) and the second pusher (35), when they assume the operating position (PO), which push the crate against the first abutment wall (33) and by the at least a contact element (38) and by the second contact element (40), when they assume the third position (P3), which push the crate agains the support (14).

A part of the longitudinal elements (60a) preferably comprises a missing portion (41) at the first end portion (61); the forks (7a, 8a) of the first plurality of forks (7) and of the second plurality of forks (8) comprise a tab (42) which projects externally from the support portion (70) towards the outside and a projecting end (43) which forms an inclined plane. The part of longitudinal elements (60a) is positioned in such a way as to define with the base (5) of the group of packages of fruit and vegetables (1), when the first end portion (61) abuts the base (5) of the group of packages of fruit and vegetables (1), a passage channel (44); the forks (7a, 8a) of the first plurality of forks (7) and of the second plurality of forks (8) being movable, along the first direction (D), in order to insert between the base (5) of the group of packages of fruit and vegetables (1) and the first end portion (61) of the longitudinal elements (6a) partially raising the packages of fruit and vegetables of the group of packages of fruit and vegetables (1) with the projecting end (43) and sliding with the tab (42) along the passage channel (44) (see figures 13-15).

The likelihood of tipping of the packages of fruit and vegetables (10) is advantageously reduced to a minimum during the insertion of the forks (7a, 8a) between the base (5) of the group of packages of fruit and vegetables (1) and the longitudinal elements (6a).

The insertion of the projecting end (43) between the base (5) and the longitudinal elements (6a) and the sliding of the tab (42) along the passage channel (44) ensure a gradual lifting of the base (5) of the group of packages of fruit and vegetables (1), which will be received restingly on the support portion (70) of the forks (7a, 8a).

The tab (42) can extend over all the length of the fork (7a, 8a).

The projecting end (43) can have a width that is smaller than that of the support portion (70).

The movement unit (24) can comprise: a first end part (45) and a second end part (46), which are arranged opposite one another; a first appendage (48) which is coupled to the first end part (45) and a second appendage (49) which is coupled to the second end part (46) (see figures 5A, 6A, 8A, 10A, 11A and 12A).

The first appendage (48) can bear the first plurality of forks (7) (see figures 5A, 6A, 8A, 10A, 11A and 12A).

The second appendage (49) can bear the second plurality of forks (8) (see figures 5A, 6A, 8A, 10A, 11A and 12A).

Further, the movement unit (24) can comprise at least a motion transmission member for slidingly moving, along the first direction (D), the first appendage (48) and the second appendage (49).

The first appendage (48) can comprise a first rail (51) which is arranged transversally to the first direction (D) (see figures 5A, 6A, 8A, 10A, 11A and 12A).

The second appendage (49) can comprise a second rail (52) which is arranged transversally to the first direction (D) (see figures 5A, 6A, 8A, 10A, 11A and 12A).

Each fork (7a) of the first plurality of forks (7) can be slidably coupled to the first rail (51).

Each fork (8a) of the second plurality of forks (8) can be slidably coupled to the second rail (52).

In this way, each fork (7a, 8a) of the first plurality of forks (7) and of the second plurality of forks (8) can slide along a transversal direction to the first direction (D).

The first rail (51) and the second rail (52) can be arranged orthogonally to the first direction (D).

The first appendage (48) and the second appendage (49) can be respectively arranged at the first end part (45) and the second end part (46).

## Claims

1. A method for collecting a group of packages of fruit and vegetables (1) from a crate (2) comprising steps of:
positioning and maintaining in position a crate (2) which comprises: a first side (2a) and a second side (2b), which are arranged opposite and parallel to one another, and a third side (2c) and a fourth side (2d), which are arranged opposite and parallel to one another and which join the first side (2a) and the second side (2b) to one another; a bottom (3) having a plurality of through-slots (4); which crate (2) contains a group of packages of fruit and vegetables (1), which group of packages of fruit and vegetables (1) comprises: a base (5) arranged resting on a bottom (3) of the crate (2); a fifth side (1a) and a sixth side (1b), which are opposite the third side (2c) and the fourth side (2d); and a seventh side (1c) and an eighth side (1d), which are opposite the first side (2a) and the second side (2b);
positioning a plurality of longitudinal elements (6) at the plurality of through-slots (4) in such a way that the longitudinal elements (6a) and the through-slots (4a) are aligned to one another;
each longitudinal element (6a) comprises a first end portion (61) and a second end portion (62), which second end portion (62) is opposite and parallel to the first end portion (61);
inserting the longitudinal elements (6a) into the through-slots (4a) in such a way that the first end portion (61) of the longitudinal elements (6a) crosses the through-slots (4a) and abuts the base (5) of the group of packages of fruit and vegetables (1) moving the group of packages of fruit and vegetables (1) and the crate (2) away from one another;
arranging a first plurality of forks (7) at the fifth side (1a) and a second plurality of forks (8) at the sixth side (1b) of the group of packages of fruit and vegetables (1);
the forks of the first plurality of forks (7) and of the second plurality of forks (8) comprise a support portion (70) for restingly receiving, at least partially, the group of packages of fruit and vegetables (1);
moving the first plurality of forks (7) and the second plurality of forks (8), in a nearing direction towards the group of packages of fruit and vegetables (1), along a first direction (D) which is transversal to the fifth side (1a) and the sixth side (1b) of the group of packages of fruit and vegetables (1), in such a way that the forks insert between the plurality of longitudinal elements (6) and the group of packages of fruit and vegetables (1) so that the forks of the first plurality of forks (7) and of the second plurality of forks (8) receive, on the support portion (70), the group of packages of fruit and vegetables (1);
moving the first plurality of forks (7) and the second plurality of forks (8) to move the group of packages of fruit and vegetables (1), when received resting on the support portion (70) of the forks of the first plurality of forks (7) and of the second plurality of forks (8), and depositing the group of packages of fruit and vegetables (1) on a rest plane (9);
moving the first plurality of forks (7) and the second plurality of forks (8) in a moving away direction from the group of packages of fruit and vegetables (1), along the first direction (D), so that the first and second pluralities of forks (7, 8) release the group of packages of fruit and vegetables (1) onto the rest plane (9) and, at the same time, laterally containing the group of packages of fruit and vegetables (1) along the fifth side (1a) and the sixth side (1b) of the group of packages of fruit and vegetables (1).

2. The method of the preceding claim, comprising a step of:
laterally containing the group of packages of fruit and vegetables (1) along the seventh side (1c) and the eighth side (1d), during the movement of the first plurality of forks (7) and of the second plurality of forks (8) in a nearing direction towards the group of packages of fruit and vegetables (1) and along the first direction (D).

3. The method of claim 1, wherein the step of moving the first plurality of forks (7) and the second plurality of forks (8) in a moving away direction from the group of packages of fruit and vegetables (1) and along the first direction (D), so that the first and second pluralities of forks (7, 8) release the group of packages of fruit and vegetables (1) on the rest plane (9) and, at the same time, laterally contain the group of packages of fruit and vegetables (1) along the fifth side (1a) and the sixth side (1b) of the group of packages of fruit and vegetables (1) includes laterally containing the sides, which are parallel to the fifth side (1a) and the sixth side (1b), of each row of packages of fruit and vegetables of the group of packages of fruit and vegetables (1).

4. The method of any one of the preceding claims, comprising a step of:
supporting the group of packages of fruit and vegetables (1) with the support portion (70) of the forks of the first plurality of forks (7) and of the second plurality of forks (8), and, contemporaneously, distancing the forks of the first plurality of forks (7) and the forks of the second plurality of forks (8) from one another, before depositing the group of packages of fruit and vegetables (1) on the rest plane (9).

5. The method of any one of the preceding claims, comprising the step of moving the first plurality of forks (7) and the second plurality of forks (8), when restingly receiving the group of packages of fruit and vegetables (1) at the support portion (70), from a first position (P1) to a second position (P2) and carrying out, in the second position (P2), steps of:
moving the first plurality of forks (7) and the second plurality of forks (8) in a moving away direction from the group of packages of fruit and vegetables (1) along the first direction (D) and, at the same time, laterally containing the group of packages of fruit and vegetables (1) along the fifth side (1a) and the sixth side (1b).

6. An apparatus (11) for collecting a group of packages of fruit and vegetables (1) from a crate (2) comprising:
a frame (12);
a positioning station (13) which is borne by the frame (12) and which is conformed so as to receive in position a crate (2), which in turn comprises: a first side (2a) and a second side (2b), which are arranged opposite and parallel to one another, and a third side (2c) and a fourth side (2d), which are arranged opposite and parallel to one another and which join the first side (2a) and the second side (2b) to one another; a bottom (3) having a plurality of through-slots (4); which crate (2) contains a group of packages of fruit and vegetables (1), which group of packages of fruit and vegetables (1) comprises: a base (5) arranged resting on a bottom (3) of the crate (2); a fifth side (1a) and a sixth side (1b), which are opposite the third side (2c) and the fourth side (2d), and a seventh side (1c) and an eighth side (1d), which are opposite the first side (2a) and the second side (2b);
the positioning station (13) comprises:
a support (14) which comprises a first plurality of through-slots (16) and which comprises a first face (14a) and a second face (14b), which second face (14b) is opposite and parallel to the first face (14a) and is conformed so as to receive the crate (2);
positioning means (15) which are arranged and configured so as to maintain the crate (2) in position in the positioning station (13) so that, when the crate (2) is received on the support (14), the through-slots (4a, 16a) of the plurality of through-slots (4a) and of the first plurality of through-slots (16) are aligned to one another;
a plurality of longitudinal elements (6) which are arranged along the first face (14a) of the support (14) and positioned so as to be aligned to the through-slots (16a) of the first plurality of through-slots (16);
each longitudinal element (6a) comprises a first end portion (61) and a second end portion (62), which second end portion (62) is opposite and parallel to the first end portion (61);
the longitudinal elements (6a) being slidably movable with respect to the support (14) in order to insert into the through-slots (16a) of the first plurality of through-slots (16) in such a way that the first end portion (61) of the longitudinal elements (6a) crosses the through-slots (16a, 4a) of the first plurality of through-slots (16) and of the plurality of through-slots (4), when the crate (2) is received on the second face (14b) of the support (14), in order to abut the base (5) of the group of packages of fruit and vegetables (1) and move the group of packages of fruit and vegetables (1) and the crate (2) away from one another;
gripping means (17), which: are arranged superiorly of the support (14); comprise a first plurality of forks (7) and a second plurality of forks (8), which forks (7a, 8a) comprise a support portion (70) for restingly receiving, at least partially, the group of packages of fruit and vegetables (1); and are movable, with respect to the frame (12), so as to position the first plurality of forks (7) at the fifth side (1a) and the second plurality of forks (8) at the sixth side (1b);
the first plurality of forks (7) and the second plurality of forks (8) being slidably movable, with respect to the support (14), so as:
to near the group of packages of fruit and vegetables (1), along a first direction (D) that is transversal to the fifth side (1a) and to the sixth side (1b) of the group of packages of fruit and vegetables (1), in such a way that the forks insert between the plurality of longitudinal elements (6) and the base (5) of the group of packages of fruit and vegetables (1);
to move away from the group of packages of fruit and vegetables (1), along the first direction (D), so as to release the group of packages of fruit and vegetables (1), once received on the support portion (70), at a rest plane (9);
a first abutment (18) and a second abutment (19) which are borne by the gripping means (17) and which are arranged opposite and parallel to one another and which are positioned so as to laterally contain the group of packages of fruit and vegetables (1), respectively, along the fifth side (1a) and the sixth side (1b), during the distancing movement, along the first direction (D), of the forks of the first plurality of forks (7) and of the second plurality of forks (8), from the group of packages of fruit and vegetables (1).

7. The apparatus (11) of the preceding claim, wherein it comprises a third abutment (22) and a fourth abutment (23): which are borne by the gripping means (17); which are arranged opposite and parallel to one another and transversally to the first abutment (18) and to the second abutment (19); which are positioned so as to laterally contain the group of packages of fruit and vegetables (1), respectively, along the seventh side (1c) and the eighth side (1d), during the reciprocal nearing movement to the group of packages of fruit and vegetables (1) and, along the first direction (D), of the forks of the first plurality of forks (7) and of the second plurality of forks (8).

8. The apparatus (11) of any one of claims 6 or 7, wherein the forks (7a, 8a) of the first plurality of forks (7) and of the second plurality of forks (8) comprise a pair of lateral containing walls (31), each arranged at the edge of the fork (7a, 8a) for containing, along the sides parallel to the seventh side (1c) and to the eighth side (1d), each row of packages of fruit and vegetables of the group of packages of fruit and vegetables (1).

9. The apparatus (11) of any one of claims from 6 to 8, wherein the positioning means (15) comprise a first abutting wall (33) which is arranged laterally to the support (14) in such a way as to abut the second side (2b) of the crate (2), when the crate (2) is received on the second face (14b) of the support (14).

10. The apparatus (11) of the preceding claim, wherein the positioning means (15) comprise a first pusher (34) and a second pusher (35) which: are slidably coupled to the frame (12); are arranged at the support (14); and are configured to push the crate (2), when the crate (2) is received on the second face (14b) of the support (14), against the first abutment wall (33).

11. The apparatus (11) of any one of claims from 6 to 10, wherein it comprises:
at least a contact element (38): which is borne by the frame (12); and which is movable so as to assume:
a third position (P3), wherein the at least a contact element (38) and the crate (2) are in contact with one another, when the crate (2) is received in the positioning station (13); and a fourth position (P4) in which the at least a contact element (38) and the crate (2) are not in contact with one another, when the crate (2) is received in the positioning station (13);
a position sensor (39) which is arranged in proximity of the at least a contact element (38) so as to detect a position change, with respect to the third position (P3), of the at least a contact element (38), following the movement of the crate (2), when the crate (2) is received in the positioning station (13) and the at least a contact element (38) assumes the third position (P3).

12. The apparatus (11) of any one of claims from 6 to 11, wherein:
a part of the longitudinal elements (60a) comprises a missing portion (41) at the first end portion (61); the forks (7a, 8a) of the first plurality of forks (7) and of the second plurality of forks (8) comprise a tab (42) which projects externally from the support portion (70) and a projecting end (43) which forms an inclined plane; the part of longitudinal elements (60a) being positioned in such a way as to define with the base (5) of the group of packages of fruit and vegetables (1), when the first end portion (61) abuts the base (5) of the group of packages of fruit and vegetables (1), a passage channel (44); the forks (7a, 8a) of the first plurality of forks (7) and of the second plurality of forks (8) being movable, along the first direction (D), in order to insert between the base (5) of the group of packages of fruit and vegetables (1) and the first end portion (61) of the longitudinal elements (6a) partially raising the packages of fruit and vegetables of the group of packages of fruit and vegetables (1) with the projecting end (43) and sliding with the tab (42) along the passage channel (44).
